(19) Europäisches Patentamt / European Patent Office / Office européen des brevets

(11) **EP 2 005 140 B1**

(12) **EUROPEAN PATENT SPECIFICATION**

(45) Date of publication and mention
of the grant of the patent:
**19.09.2018 Bulletin 2018/38**

(51) Int Cl.:
*G01N 19/02* *(2006.01)*       *B60T 8/172* *(2006.01)*
*B60W 40/064* *(2012.01)*       *B60W 50/00* *(2006.01)*

(21) Application number: **07730562.1**

(22) Date of filing: **11.04.2007**

(86) International application number:
**PCT/FI2007/000093**

(87) International publication number:
**WO 2007/116123 (18.10.2007 Gazette 2007/42)**

(54) **METHOD FOR COLLECTING INFORMATION ON ROAD SURFACE SLIPPERINESS**

VERFAHREN ZUR SAMMLUNG VON INFORMATIONEN ÜBER DIE STRASSENGLÄTTE

PROCEDE POUR COLLECTER DES INFORMATIONS CONCERNANT LA GLISSANCE DE SURFACE DE ROUTE

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **11.04.2006 FI 20060351**

(43) Date of publication of application:
**24.12.2008 Bulletin 2008/52**

(73) Proprietor: **Valtion Teknillinen Tutkimuskeskus**
**02150 Espoo (FI)**

(72) Inventors:
• **MÄKELÄ, Kari**
**02150 Espoo (FI)**
• **ERKKILÄ, Kimmo**
**02150 Espoo (FI)**

(74) Representative: **Papula Oy**
**P.O. Box 981**
**00101 Helsinki (FI)**

(56) References cited:
EP-A2- 1 150 266      WO-A1-2004/039621
GB-A- 2 243 657       JP-A- H1 035 463
US-A- 5 419 624       US-A1- 2001 029 421
US-A1- 2005 038 589   US-B2- 6 650 988

• TAKASHI NAKATSUJI ET AL: "Relationship between Winter Road Surface Conditions and Vehicular Motions Measured by GPS-Equipped Probe Vehicles", TRANSPORTATION RESEARCH BOARD ANNUAL MEETING 2003 , 1 January 2003 (2003-01-01), pages 1-21, XP055185122, Retrieved from the Internet: URL:http://www.ltrc.lsu.edu/TRB_82/TRB2003 -000757.pdf
• HONG S BAE ET AL: "Road grade and vehicle parameter estimation for longitudinal control using GPS", IEEE INTELLIGENT TRANSPORTATION SYSTEMS 2001, 25 August 2001 (2001-08-25), - 29 August 2001 (2001-08-29), pages 166-171, XP010555764, ISBN: 978-0-7803-7194-1

## Description

### FIELD OF THE INVENTION

The invention relates to detecting road surface slipperiness on the basis of operational data acquired from vehicles traveling on the road, and to collecting the information on the detected slipperiness.

### BACKGROUND OF THE INVENTION

Information on road surface slipperiness is useful for several applications. Road safety can be significantly improved for example by informing drivers of the slipperiness before they are able to notice it themselves. In addition to ensuring that the drivers are properly informed of the slipperiness and thus improving the maneuverability of individual vehicles, safety can be efficiently improved by reducing slipperiness directly by means of road maintenance activities. When optimizing road maintenance activities, it is extremely important that information as real-time as possible may be acquired on road surface slipperiness from different areas.

Information on the slipperiness is acquired most efficiently from different systems which detect slipperiness directly from the vehicles traveling on the road. The vehicles may have different, for example optical or acoustic sensors monitoring the road surface and emitting signals, which can be used when assessing road surface conditions. However, expensive and complex auxiliary sensors are not required, if information collected by systems which already exist in the vehicles is used for determining the slipperiness. In modern vehicles, it is possible to collect from the vehicle's data bus in electronic form firstly operational data on the motor, and secondly, for example by using means provided in the anti-lock breaking systems, information on wheel rotating speeds, which can be used to further determine possible wheel slips. Various methods are known for determining the level of road surface slipperiness particularly on the basis of the driving wheel or braking wheel slips.

The slip or the slip ratio normally means the ratio of the remainder of the wheel radial velocity and the vehicle's real velocity to said vehicle's real velocity. In addition to friction, also the traction force applied to the road from the wheel, and the normal force applied to the road from the wheel and resulting from the vehicle mass and Earth's gravity naturally contribute to the wheel slip. The greater the traction force and the smaller said normal force, the greater is the wheel slip. The dependency between the friction coefficient, the traction force and the slip is often depicted as a curve representing the traction force (potentially normalized i.e. divided by said normal force) as a function of the slip. The curve has a maximum value corresponding to the friction coefficient between said wheel and road surface. It is difficult to determine the maximum value directly from the detected slip, because, in normal driving, the slip is most often significantly smaller than the slip corresponding to said maximum value. On the other hand, when the slip reaches the level corresponding to the maximum value of said curve, the driver is able to notice the slipperiness anyway. Therefore, applications that do not require an exact and absolute friction coefficient do not show any need for a separate detection for slipperiness. One such application is for example road maintenance during winter, when it is only sufficient to know the areas presenting such slipperiness that for example sanding of snow clearance would be needed.

One method for estimating the friction between road surface and the wheel from the low wheel slip level is disclosed in publication "Slip-based Tire-Road Friction Estimation", Automatica, Vol. 33, No. 6, pp. 1087-1999, 1997. The method is based on measurements of the normalized traction force $\mu = \dfrac{F}{N}$, where $F$ is the traction force referred to above and N, respectively, is said normal force, and of the slip s. A linear dependency $\mu = k(s - \delta)$ is expected between them. An essential step in the method is to estimate the slope $k$ and the offset parameter $\delta$ by applying the complex mathematical Kalman filter to the measured data. The method also involves determining the parameter $\gamma = 4Var(e)$ proportional to variation $e$ in the measured wheel rotational velocity resulting from road surface roughness. Finally, the friction and the road surface type may be roughly graded, on the basis of parameters $k$ and $\gamma$ determined from the measured data, for example as a surface with a high friction coefficient, as a slippery surface and as an extremely slippery surface. The method also enables recognition of a gravel road as a specific type of surface.

Another known method for calculating the friction coefficient from the measured slip and from the vehicle velocity and acceleration is disclosed in patent application US 2005/0038589 A1. The method relates in particular to adjusting the wheel torque. The solution involves determining, as an intermediate step, the intended rotational velocity of the wheel and the intended wheel slip, both depending on the intended velocity. An essential step in the method comprises using the Fourier series when calculating the friction coefficient.

A further known method for calculating the friction coefficient from the measured slip is disclosed in patent application US 5419624 A1. The method relates in particular to instantaneously detecting the driving torque and the wheel load if a wheel slip limit has been exceeded. The friction coefficient is calculated based on these quantities and information concerning the friction coefficient is supplied to the antilock braking system and/or state of the road surface via a display.

Patent publication US 6650988 B2 describes a method for determining road surface quality from the fact stating that when the friction coefficient is low, such as on worn and frozen snow, it is significantly more unstable than for example on asphalt. Therefore, for determining whether the friction coefficient is high or not, the method of the publication comprises firstly examining the variation in slip ratios between the left and the right side wheels. Correlation coefficient and linear regression coefficient between the slip ratio of front and back wheels and vehicle acceleration are also determined. If said variation exceeds a certain value, a threshold value will be set for determining the road surface quality from the linear regression coefficient.

The methods described above are computationally heavy and complex. They are therefore over-extensive for situations where the only focus of interest is to know whether the road surface is possibly slippery or not. Complex computation also sets higher requirements for the capacity of the apparatus performing the calculations. If one wishes to increase the accuracy of road surface determination, the computational requirements will become even higher. However, when based on information collected by a single vehicle only, calculation of the friction coefficient is inevitably left inaccurate to some extent. Each known method also has its disadvantages. The last-mentioned, for example, only works in situations of acceleration/braking. The first-mentioned, on the other hand, is limited to situations occurring only in "normal driving".

## OBJECTIVE OF THE INVENTION

It is as objective of the invention to provide a novel method for collecting information on possible road surface slipperiness as easily, efficiently and reliably as possible.

## SUMMARY OF THE INVENTION

The method of the invention for collecting information on road surface slipperiness is characterized by what has been presented in independent claim 1.

The method for collecting information on road surface slipperiness comprises collecting from the data bus of a freight vehicle driving on the road operational data on the vehicle, using the operational data to determine the slip ratio $s$ of the vehicle's driving wheel and the traction force $F$ applied to the road from the driving wheel for moving the vehicle, and determining road surface slipperiness from the slip ratio $s$, the traction force $F$ and the normal force $N$ applied to the road from the vehicle's driving wheel. Operational data collected in electronic form from the vehicle's data bus, various types of which are presently in use, one example being a CAN (Controller Area Network), may include for example motor torque and rotation speed and rotational velocity of the vehicle wheels. The operational data used in the determination, or the data derived from the operational data in the intermediate steps of the method, may also include for example vehicle velocity and acceleration. The slip ratio herein means the ratio of the remainder of the radial velocity of the driving wheel, proportional to its rotational velocity and its wheel radius, and the vehicle's real velocity, to the real velocity. The collected operational data may be stored for example in the vehicle's on-board computer or in some other data processor installed in the vehicle for determining the slipperiness with said device and with software installed therein. Said normal force affects the slip ratio such that, with a specific traction force, the smaller the normal force applied to the road from the driving wheel, the greater the slip.

In the method of the invention, freight vehicles are used. This means vehicles or vehicle combinations with the maximum weight of at least 3500 kg, preferably of at least 18000 kg, and most preferably of at least 42000 kg. The maximum weight is the greatest allowable total mass of a laden vehicle. The vehicle type may respectively be for example a truck, a passenger transportation vehicle, a freight truck, or a full trailer vehicle combination as the largest. Compared to passenger cars and vans, freight vehicles provide significant advantages for determining the slipperiness. This is because said traction force applied to the road from the driving wheel is determined by the motor load or, in other words, by the power produced by the motor, or by its torque. However, some of the total power is always dissipated, for example in power transmission. Only the portion exceeding this dissipation portion is significant when determining the slipperiness. The smaller the effective portion of the power exceeding the dissipation portion, the more inaccurate it is to determine, and the more inaccurate it is thus to determine the slipperiness from it. Freight vehicles provide the advantage that the motor, when loaded, typically approaches its maximum capacity, such that the effective portion of said power or force may de determined more accurately. The situation with passenger cars, for example, is most often the opposite, as the required power barely exceeds the dissipation level.

Perhaps an even more essential advantage with freight vehicles is that although the total mass and thus the required traction force of, for example, a full trailer truck is multiplied compared to a passenger car, the mass borne by the driving wheel of the truck is not, however, increased to the same extent. This is due to the greater number of axles among which the total mass is distributed. The driving wheel of a truck is therefore more prone to slipping than the driving wheel of a passenger car, which means that slipperiness is detected significantly more sensitively with freight vehicles.

In accordance with the invention, the method comprises in predetermining first the slip ratio $s_0$ of said driving wheel on a non-slip surface as a function of the normal force $N$ applied to the road from the driving wheel and depending on the vehicle mass, and of said traction force $F$. Driving tests are performed on a surface known to be non-slip and suitable for use as a reference. With driving tests, the reference slip ratio $s_0$ can be determined very accurately, because, in addition to the slip, also the effects of the velocity and of deformations of the wheel structure on the dynamic radius of the wheel can be taken into consideration. The normal force is the force applied perpendicularly to the road surface and depending on the weight of the vehicle, caused by Earth's gravity.

In accordance with the invention, the method comprises determining thereafter the slip ratio $s_1$, the normal force $N_1$, and the traction force $F$ of the driving wheel during driving. The normalized slip ratio $s'$ is then determined by comparing the slip ratio $s_1$ of the driving wheel during driving to said predetermined slip $s_0$ on a non-slip surface with the same the normal force $N_1$ and traction force $F_1$. The level of road surface slipperiness is determined from the normalized slip ratio thus achieved. In other words, the normalized slip ratio indicates the degree of slipping with regard to the surface known to be non-slip, so the slipperiness is thereby detected from the increase in slipping. The slipperiness may be graded according to the degree of said increase in the slip ratio.

The method of the invention is significantly simpler than the methods in accordance with the prior art intended for determining the absolute slipperiness or friction coefficient. This enables a very quick acquisition of information on the slipperiness. The method is also extremely sensitive and indicates even minute increases in slipperiness, which is advantageous, together with said quickness, in particular when drivers of the vehicles are to be informed before they are able to notice the slipperiness themselves. As the method is based directly on changes in the behavior of the driving wheel with regard to the non-slip surface, it is also extremely reliable. The loss of grip due to tire wearing may, of course, be determined as slight slipperiness even on a surface known to be non-slip. This is, however, a harmless and safe defect, and, on the other hand, one that the drivers are able to notice themselves, so that the impaired tire properties can be taken into account by adjusting the processing parameters for the information on slipperiness.

To determine the normal force $N_1$, which is an essential factor in the wheel slip, and therefore also in determining the slipperiness, and is applied to the road from the driving wheel during driving, a preferred embodiment of the invention involves collecting from the vehicle's data bus data regarding the axle load of the driving wheel. In modern freight vehicles, the data acquired directly from the data bus often includes the data on the axle load, which is the most straightforward way to determine the normal force.

An alternative way to determine the normal force $N_1$ is to collect positional data on the vehicle traveling on the road, and to determine the vehicle mass m from the vehicle's positional data and operational data collected during driving. The normal force $N_1$ can be determined from the vehicle's or vehicle combination's weight distribution among different axles. The mass may be determined in practice from the positional data and the operational data, for example from the vehicle's traveling status and from forces acting on the vehicle. On the other hand, the work needed for moving the vehicle during a specific transition may also be determined, and the mass calculated from the energy balance.

More specifically, the method for determining the mass described above may comprise the steps of 1) predetermining the dependence of the work $W_r$ required for moving the vehicle on vehicle's transition and mass, 2) using the positional data and the operational data to determine the distance d traveled by the vehicle, the height change $\Delta h$ of the vehicle's positions, the change in the vehicle's velocity v and the actual work $W$ needed for moving the vehicle, taken from a measuring cycle during driving, and 3) calculating the vehicle mass m from the dependence of the work $W_r$ required for moving the vehicle on vehicle's transition and mass, from the distance d traveled by the vehicle, the height change $\Delta h$ of the vehicle's positions, the change in the vehicle's velocity v and the actual work $W$ needed for moving the vehicle, taken from the measuring cycle, and from the energy conservation principle. For determining the mass, the positional data, as well as the operational data, may be collected for example every second from the vehicle's data bus. To determine the work $W_r$ required for moving the vehicle, driving tests may be performed for example with different loads and different transitions. The dependence $W_r(d,\Delta h,m)$ can also be used for example to determine the coefficient $K$ determining the effect of the vehicle mass on forces resisting the vehicle movement. The work $W$ may then be calculated by first determining the instantaneous motor power $P_i$ from the motor torque and rotation speed, and then determining the work by multiplying the instantaneous power by the durations of the information collecting cycles and by adding together the products. The energy conservation equation $W = Kmd + mg\Delta h + (m\Delta(v^2))/2$ may then be solved for the mass m. A more detailed description of such a method for determining the mass is disclosed in a previous patent application FI 20050670 by the applicant.

By determining the vehicle's axle load or mass and the normal force $N_1$ of the driving wheel from the information collected during driving, there will first of all not be any need for the use of complex weighing apparatuses, and, secondly, potential inaccuracies in determining the mass by means of waybills or the like are avoided. Furthermore, information on the vehicle's mass can be updated for example after each step of loading or unloading, thus ensuring that the calculation of slipperiness is always based on sufficiently accurate source data.

A preferred embodiment of the invention involves determining the normalized slip ratio $s'$ by subtracting the slip ratio $s_0$ on a non-slip surface from the slip ratio $s_1$ during driving. Depending on the situation and the desired quality of the information on slipperiness, it is also possible to examine the relation of said slip ratios, or the ratio of the above-mentioned remainder of the slip ratios to the slip ratio on the non-slip surface.

To ensure an accurate determination of the slipperiness, it is preferably determined only as the motor torque exceeds the preset threshold value. This ensures that the so called effective portion of the torque, and, therefore, of the power, exceeding the dissipation portion described above, is sufficient to be determined accurately enough. This, in turn, ensures that the traction force and finally the slipperiness are determined accurately. Said threshold value is preferably at least 50%, more preferably at least 70%, for example 90% of the motor torque maximum value, depending, for example, on the mass, the motor capacity and the extent of the power dissipation of said vehicle.

In addition to determining the slipperiness, the preferred embodiment of the method in accordance with the invention comprises collecting the vehicle's positional data during driving, and transferring the positional data and the corresponding information on the slipperiness to the central system for storage and further processing. The positional data and the information on the slipperiness may thus be for example combined in the central system to form a chart on slipperiness, which in turn can be useful when targeting road maintenance activities, such as snow clearance, sanding or salting, to appropriate areas. On the other hand, the information on slipperiness can be sent as a warning from the central system to other vehicles approaching the area with the high level of slipperiness. The information on slipperiness transferred to the central system may be pre-determined by the vehicle's on-board computer or other data processor, or it may be comprised of operational data used as source data when determining the slipperiness, in which case the actual determination of the slipperiness is completed by the central system.

The positional data and the information on the slipperiness are preferably transferred to the central system during driving via a wireless data transfer means, such as a GSM transmitter. The information on road surface slipperiness is thus quickly transmitted, resulting in an effective targeting of both road maintenance activities and warnings on the slipperiness to the appropriate areas. On the other hand, in situations where real-time data is not necessary, the information may be transferred to the central system after the driving using an intermediate storage medium, such as a memory card.

In a preferred embodiment of the invention, road surface slipperiness is determined in the central system by combining the information on slipperiness collected from various vehicles. Using information collected from various vehicles improves the accuracy and reliability in determining the slipperiness. On the other hand, information from an individual vehicle may be compared with information collected by other vehicles from the same route to calibrate vehicles transmitting information which deviates from the information transmitted by the other vehicles. A calibrated vehicle serves thereby as a "sensor", more reliable than before, and can be used for routes with less traffic flow where it may not be possible to acquire any information collected by other vehicles at a certain point in time. As stated above, the information on slipperiness transferred to the central system may comprise, in addition to the information on slipperiness as ready-determined, "raw data" used for determining the actual slipperiness, such that the final calculation of the slipperiness is performed centrally, efficiently and accurately in the central system based on the information sent from several vehicles.

The vehicles' positional data required for determining the slipperiness is preferably collected using a GPS satellite positioning apparatus.

The means required for the method in accordance with the invention preferably comprise first of all data collection means for collecting operational data in electronic form from the vehicle's data bus. The operational data, as well as the positional data, can be collected in a memory unit provided in the vehicle's on-board computer or in other suitable data processor. Different steps of the method in accordance with the invention are preferably realized at least partly automatically using a computer program installed on the data processor, such that no actions are required from the driver. The central system may also comprise different storage, processing and transferring means and software for data in electronic form.

The method in accordance with the invention provides several advantages with regard to the solutions of the prior art. A method for determining slipperiness by comparison with a surface known to be non-slip is easy to use, fast, sensitive and reliable. By using the operational and positional data collected during driving to accurately determine the vehicle mass, contributory to the calculation results, the errors caused by changes in the mass in determining the slipperiness are avoided. The accuracy of the information on slipperiness can be further improved by combining in the central system information on slipperiness collected by several vehicles.

## LIST OF FIGURES

In the following, the invention will be described in detail by means of examples of its embodiments with reference to the accompanying drawings, in which

Fig. 1 is a flowchart illustrating one embodiment in accordance with the invention, and
Fig. 2 illustrates the equipment used in the method in accordance with the invention and the principle of the method.

## DETAILED DESCRIPTION OF THE INVENTION

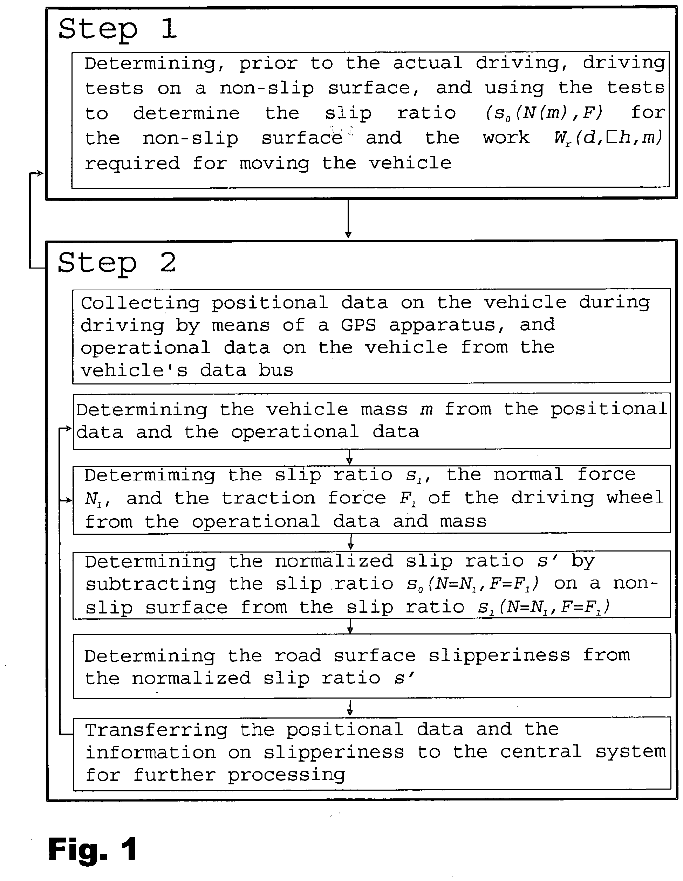

In Fig. 1 the method is divided into two main steps. The first step comprises performing driving tests by driving a vehicle on a non-slip surface with different masses and on different routes. During the driving tests, the vehicle's positional data and operational data are collected, and the operational data used first of all for determining the slip ratio $s_0$ of the vehicle's driving wheel on a non-slip surface as a function of the normal force $N$

applied to the road from said wheel and caused by the vehicle mass $m$ and Earth's gravity, and of the traction force $F$ of the driving wheel. Secondly, the operational data and the positional data are used for determining the work $W_r$ required for moving the vehicle as a function of the vehicle's transition and mass.

Step 2 comprises collecting the vehicle's positional data and operational data during driving. The positional data and operational data collected during a specific measuring cycle are used for determining the vehicle mass. This can be determined for example by comparing the actual work, the transition during the measuring cycle, and the change in velocity with the predetermined work required for moving the vehicle as a function of the transition, the vehicle mass and the change in velocity. The vehicle's operational data is then used for determining the slip ratio $s_1$ of the driving wheel, the traction force $F_1$ of said wheel and, from the vehicle mass $m$ determined above and known weight distribution, the normal force $N_1$ applied to the road from the driving wheel. Alternatively, instead of determining the mass as described above, the normal force could be determined more straightforwardly from the axle load acquired from the vehicle's data bus. The slip ratio $s_0$ on a non-slip surface in accordance with the respective traction force $F_1$ and normal force $N_1$ is subtracted from the slip ratio $s_1$. The slipperiness is then determined from the normalized slip ratio s' thus obtained. For example, specific levels of the normalized slip ratio, corresponding to specific levels of slipperiness, can be predetermined. When slipperiness is detected, a warning can first of all be sent to the driver, in case they have not yet noticed the slipperiness themselves. The information on slipperiness is also transferred during driving, together with the positional data, to the central system collecting the information on slipperiness, where it can be processed further. It is also possible to perform the actual determination of the slipperiness in the central system, possibly using the information required for the determination transferred from several vehicles. The determination steps described above, except for the mass determination, are preferably realized as a continuously repeating process, which allows for the detection of slipperiness as fast as possible. The mass may, if desired or required, also be redetermined for example after loading or unloading. Due to wearing, the tires will lose their grip in the course of time. Therefore the slip ratio $s_0$ on a non-slip surface may also be redetermined from time to time, for example if the method is discovered to produce information on slipperiness that is clearly inaccurate.

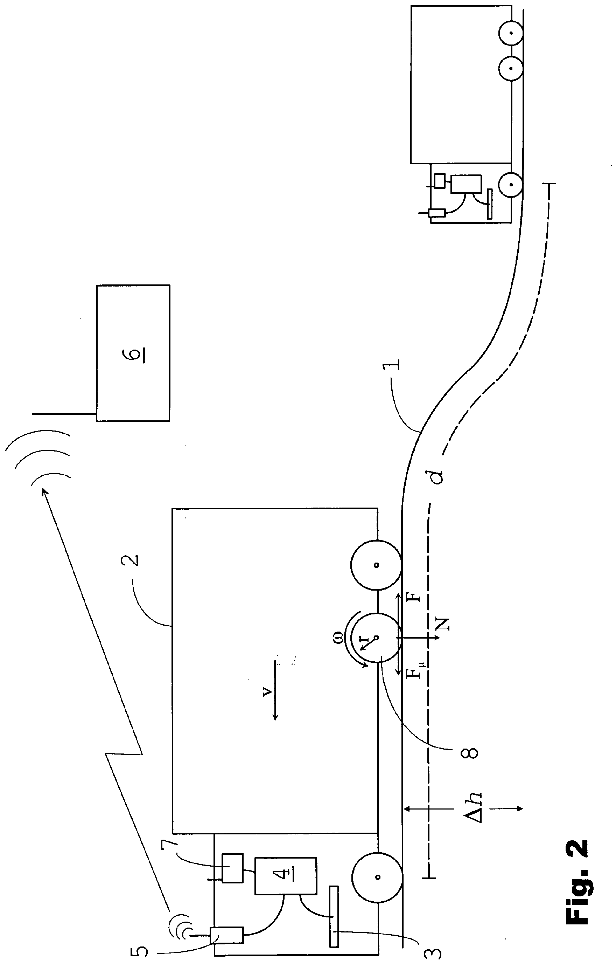

Fig. 2 firstly shows a schematic view of the parts of the apparatus required for the method of the invention. A truck 2 traveling on a road 1 has a CAN bus 3, which collects information on operations of the vehicle motor, on wheel rotational velocity, and on other similar operational data and is linked via a data link to a computer 4 installed in the vehicle for collecting operational data on the computer. Also a GSM transmitter/receiver 5 is linked to the computer for transferring information between the truck and a central system 6. The central system 6 may comprise different data processing systems for gathering and processing information on slipperiness in a desired way, and also data communication means. The central system is thus able to both receive information from the truck 2 and to transfer the processed information back to the truck or further to other vehicles. A GPS receiver 7 is also connected to the computer for determining the vehicle's positional data and for collecting said data on the computer 4.

Fig. 2 also illustrates the principle of the determination of slipperiness. The truck 2 of the figure advances at a velocity $v$, its driving wheel 8 rotating at an angular velocity $\omega$. The radial velocity $v_\omega$ of the driving wheel is the angular velocity multiplied by the wheel radius: $v_\omega = \omega r$. When there is no wheel slip, the radial velocity is the same as the vehicle velocity $v$. When examining the contact point of the driving wheel 8 and the road 1, one is able to determine, in accordance with the figure, the traction force F rotating the wheel and tending to slide the wheel surface with regard to the road. To the opposite direction is applied the frictional force $F_\mu = \mu N$ accordant with the friction between the wheel and the road surface, in which N is the normal force $N = mg$ proportional to the mass m of the truck 2, caused by Earth's gravity and applied to the road surface from the driving wheel 8, in which $g$ is the gravitational acceleration. If the frictional force is strong enough, there will not be any sliding motion relative to the road surface, which means that the wheel does not slip. As the traction force $F$ exceeds the frictional force $F_\mu$, the driving wheel 8 starts to slip such that its radial velocity exceeds the vehicle velocity. The slip ratio, determined as the ratio of the increase in radial velocity and the real velocity, depends, in accordance with what has been described above, on the friction coefficient, but essentially also on the normal force $N$ and the traction force $F$. The method of the invention involves predetermining, by means of driving tests, the dependence of the slip ratio of said vehicle and of its driving wheel on these factors on a surface known to be non-slip, such as dry asphalt. The slip ratio detected during driving is compared to this dry surface slip ratio with the same traction force and normal force such that a normalized slip ratio s' representing the increase of slipperiness with regard to the known dry surface is formed from the comparison, for example by subtracting.

Fig. 2 also shows the distance d traveled by the vehicle and the height change $\Delta h$ during the measuring cycle for determining the truck mass. By comparing these and the predetermined work $W_r(d,\Delta h,m)$ required for moving the truck with the actual work W calculated from the truck's operational and positional data acquired during the measuring cycle, the vehicle mass, essential for the accuracy in determining the slipperiness, can be determined by the energy conservation principle. Determination of the total mass is naturally not necessary, if the axle load data is available in the vehicle's data bus.

The invention is not limited merely to the examples of its embodiments referred to above; instead many variations are possible within the scope of the inventive idea defined by the claims.

## Claims

1. A method for collecting information on road (1) surface slipperiness, the method comprising collecting from a data bus (3) of a freight vehicle (2) traveling on the road operational data on the vehicle, using the operational data to determine the slip ratio s of the vehicle's driving wheel (8) and the traction force $F$ applied to the road from the driving wheel for moving the vehicle, and determining the road surface slipperiness from the slip ratio $s$, the traction force F and the normal force N applied to the road from the vehicle's driving wheel, **characterized in that** the method comprises

   - predetermining the slip ratio $s_0$ of the driving wheel (8) during driving on a non-slip surface as a function of the normal force $N$ and the traction force $F$,
   - determining the slip ratio $s_1$, the normal force $N_1$ and the traction force $F_1$ of the driving wheel (8) during driving,
   - determining the normalized slip ratio $s'$ by comparing the slip ratio $s_1$ of the driving wheel (8) during driving with the predetermined slip ratio $s_0$ of the driving wheel (8) during driving on a non-slip surface with the same traction force $F_1$ and normal force $N_1$, the normalized slip ratio indicating the degree of slipping with regard to the non-slip surface; and
   - determining the road (1) surface slipperiness from the normalized slip ratio $s'$ said determining comprising detecting the slipperiness from the increase in slipping.

2. The method according to claim 1, **char** - **acterized** in that the axle load data of the driving wheel (8) is collected from the vehicle's (2) data bus to determine the normal force $N_1$ during driving.

3. The method according to claim 1, **characterized in that** positional data on the vehicle (2) traveling on the road (1) is collected, and the vehicle's mass $m$ determined by using the vehicle's positional data and operational data during driving, to determine the normal force $N_1$ during driving.

4. The method according to claim 3, **characterized in that** the determination of the vehicle mass $m$ involves

   - predetermining the dependence of work $W_r$ required for moving the vehicle (2) on the transition $d$, $\Delta h$ and vehicle mass $m$
   - using the positional data and the operational data to determine the distance $d$ traveled by the vehicle (2), the height change $\Delta h$ in the vehicle's positions, the change in the vehicle's velocity $v$, and the actual work $W$ for moving the vehicle, acquired from the measuring cycle during driving, and
   - calculating the mass $m$ of the vehicle (2) from the dependence of the work $W_r$ required for moving the vehicle on the transition traveled by the vehicle and on the vehicle mass, the distance d traveled by the vehicle, the height change $\Delta h$ in the positions, the change in velocity $v$, and the actual work $W$ for moving the vehicle, during the measuring cycle, and the energy conservation principle.

5. The method according to any one of claims 1 - 4, **characterized in that** the normalized slip ratio $s'$ is determined by subtracting the slip ratio $s_0$ on a non-slip surface from the slip ratio $s_1$ during driving.

6. The method according to any one of claims 1 - 5, **characterized in that** to ensure an accurate determination of the slipperiness, it is determined only as the motor torque exceeds a preset threshold value.

7. The method according to claim 6, **char** - **acterized** in that the threshold value is at least 50%, preferably at least 70% of the motor torque maximum value.

8. The method according to any one of claims 1 - 7, **characterized in that** positional data on the vehicle (2) is collected during driving, and the positional data, along with the information on slipperiness, is transferred to the central system (6) for storage and further processing.

9. The method according to claim 8, **characterized in that** the positional data and the information on slipperiness are transferred to the central system (6) during driving using a wireless data transfer means (5).

10. The method according to claim 8 or 9, **characterized in that** the road (1) surface slipperiness is determined in the central system (6) by combining the information on slipperiness collected by several vehicles (2).

11. The method according to any one of previous claims, **characterized in that** positional data on the vehicle (2) is collected using a GPS satellite positioning apparatus (7).

**Patentansprüche**

1. Verfahren zum Sammeln von Informationen über Straßen (1)-Glätte, wobei das Verfahren das Sammeln, aus einem Datenbus (3) eines auf der Straße fahrenden Lastwagens (2), von Betriebsdaten über das Fahrzeug, das Verwenden der Betriebsdaten zur Bestimmung des Schlupfverhältnisses s des Fahrzeug-Lenkrads (8) und der auf die Straße von dem Antriebsrad zur Bewegung des Fahrzeugs aufgebrachten Traktionskraft $F$, und Bestimmen der Straßenglätte aus dem Schlupfverhältnis $s$, der Traktionskraft F und der auf die Straße von dem Fahrzeug-Antriebsrad aufgebrachten Normalkraft N umfasst, **dadurch gekennzeichnet, dass** das Verfahren

   - das Vorbestimmen des Schlupfverhältnisses $s_o$ des Antriebsrads (8) während des Fahrens auf einer nicht rutschigen Fläche als Funktion der Normalkraft N und der Traktionskraft F umfasst,
   - Bestimmen des Schlupfverhältnisses $s_1$, der Normalkraft $N_1$ und der Traktionskraft $F_1$ des Antriebsrads (8) während des Fahrens,
   - Bestimmen des normalisierten Schlupfverhältnisses $s'$ durch Vergleichen des Schlupfverhältnisses $s_1$ des Antriebsrads (8) während des Fahrens mit dem vorbestimmten Schlupfverhältnis $s_0$ des Antriebsrads (8) während des Fahrens auf einer nicht rutschigen Fläche mit der gleichen Traktionskraft $F_1$ und Normalkraft $N_1$ des normalisierten Schlupfverhältnisses, das den Schlupfgrad bezüglich der nicht rutschigen Fläche angibt; und
   - Bestimmen der Straße (1)-Glätte aus dem normalisierten Schlupfverhältnis $s'$, wobei das Bestimmen das Erfassen der Glätte aus der Zunahme des Rutschens umfasst.

2. Verfahren nach Anspruch 1, **dadurch gekennzeichnet, dass** die Achslastdaten des Antriebsrads (8) aus dem Fahrzeug (2)-Datenbus zur Bestimmung der Normalkraft $N_1$ während des Fahrens gesammelt werden.

3. Verfahren nach Anspruch 1, **dadurch gekennzeichnet, dass** Positionsdaten über das auf der Straße (1) fahrende Fahrzeug (2) und die unter Verwendung der Positionsdaten und Betriebsdaten während des Fahrens bestimmte Fahrzeug-Masse zur Bestimmung der Normalkraft $N_1$ während des Fahrens gesammelt werden.

4. Verfahren nach Anspruch 3, **dadurch gekennzeichnet, dass** die Bestimmung der Fahrzeug-Masse $m$

   - das Vorbestimmen der Abhängigkeit von Arbeit $W_r$, die zur Bewegung des Fahrzeugs (2) auf den Übergang $d$, $\Delta h$ erforderlich ist, und der Fahrzeugmasse $m$,
   - das Verwenden der Positionsdaten und der Betriebsdaten zur Bestimmung des Abstands d, der durch das Fahrzeug (2) zurückgelegt wurde, der Höhenänderung $\Delta h$ in den Fahrzeug-Positionen, die Änderung der FahrzeugGeschwindigkeit $v$, und der tatsächlichen Arbeit $W$ zu Bewegung des Fahrzeugs, die aus dem Messzyklus während des Fahrens erfasst wurde, und
   - das Berechnen der Masse $m$ des Fahrzeugs (2) aus der Abhängigkeit von der Arbeit $W_r$, die zum Bewegen des Fahrzeugs über die von dem Fahrzeug zurückgelegte Strecke und über die Fahrzeugmasse erforderlich ist, des von dem von dem Fahrzeug zurückgelegten Abstands d, der Höhenänderung $\Delta h$ in den Positionen, der Änderung in der Geschwindigkeit $v$, und der tatsächlichen Arbeit W zum Bewegen des Fahrzeugs während des Messzyklus, und des Energieerhaltungssatzes, einschließt.

5. Verfahren nach einem der Ansprüche 1 - 4, **dadurch gekennzeichnet, dass** das normalisierte Schlupfverhältnis s' durch Subtraktion des Schlupfverhältnisses $s_o$ auf einer nicht rutschigen Fläche von dem Schlupfverhältnis $s_1$ während des Fahrens bestimmt wird.

6. Verfahren nach einem der Ansprüche 1 - 5, **dadurch gekennzeichnet, dass** zur Sicherstellung einer genauen Bestimmung der Glätte, sie nur bestimmt wird, wenn das Motordrehmoment einen voreingestellten Schwellenwert übersteigt.

7. Verfahren nach Anspruch 6, **dadurch gekennzeichnet, dass** der Schwellenwert mindestens 50 %, vorzugsweise mindestens 70 % des Motordrehmoment-Maximalwerts beträgt.

8. Verfahren nach einem der Ansprüche 1 - 7, **dadurch gekennzeichnet, dass** Positionsdaten über das Fahrzeug (2) während des Fahrens gesammelt werden, und die Positionsdaten, zusammen mit den Informationen über Glätte, an das Zentralsystem (6) zur Speicherung und Weiterverarbeitung übertragen werden.

9. Verfahren nach Anspruch 8, **dadurch gekennzeichnet, dass** die Positionsdaten und die Informationen über Glätte an das Zentralsystem (6) während des Fahrens unter Verwendung eines drahtlosen Datenübertragungsmittels (5) übertragen werden.

10. Verfahren nach Anspruch 8 oder 9, **dadurch gekennzeichnet, dass** die Straßen (1)-Oberflächenglätte in dem Zentralsystem (6) durch Kombinieren der durch mehrere Fahrzeuge (2) gesammelten Informationen über Glätte bestimmt wird.

11. Verfahren nach einem der vorherigen Ansprüche, **dadurch gekennzeichnet, dass** Positionsdaten über das Fahrzeug (2) unter Verwendung eines GPS-Satellitennavigationsgeräts (7) gesammelt werden.

**Revendications**

1. Procédé pour collecter des informations concernant la glissance de surface d'une route (1), le procédé comprenant la collecte à partir d'un bus de données (3) d'un véhicule de fret (2), voyageant sur la route, de données opérationnelles concernant le véhicule, l'utilisation des données opérationnelles pour déterminer le rapport de glissement s des roues motrices du véhicule (8) et de la force de traction $F$ appliquée à la route en provenance des roues motrices pour déplacer le véhicule, et la détermination de la glissance de la surface de route à partir du rapport de glissement s, de la force de traction $F$ et de la force normale $N$ appliquée à la route à partir des roues motrices du véhicule, **caractérisé en ce que** le procédé comprend

   - la prédétermination du rapport de glissement $s_0$ des roues motrices (8) pendant la conduite sur une surface antidérapante comme une fonction de la force normale $N$ et de la force de traction $F$,
   - la détermination du rapport de glissement $s_1$, de la force normale $N_1$ et de la force de traction $F_1$ des roues motrices (8) pendant la conduite,
   - la détermination du rapport de glissement normalisé s'en comparant le rapport de glissement $s_1$ des roues motrices (8) pendant la conduite au rapport de glissement prédéterminé $s_0$ des roues motrices (8) pendant la conduite sur une surface antidérapante avec les mêmes force de traction $F_1$ et force normale $N1,$ le rapport de glissement normalisé indiquant le degré de glissement en ce qui concerne la surface antidérapante ; et
   - la détermination de la glissance de surface de la route (1) à partir du rapport de glissement normalisé $s'$, ladite détermination comprenant la détection de la glissance à partir de l'augmentation du glissement.

2. Procédé selon la revendication 1, **caractérisé en ce que** les données de charge d'axe des roues motrices (8) sont collectées à partir du bus de données du véhicule (2) pour déterminer la force normale $N_1$ pendant la conduite.

3. Procédé selon la revendication 1, **caractérisé en ce que** des données positionnelles concernant le véhicule (2) voyageant sur la route (1) sont collectées, et la masse $m$ du véhicule étant déterminée en utilisant les données positionnelles du véhicule et des données opérationnelles pendant la conduite, pour déterminer la force normale $N_1$ pendant la conduite.

4. Procédé selon la revendication 3, **caractérisé en ce que** la détermination de la masse $m$ de véhicule implique

   - la prédétermination de la dépendance de travail $W_r$ exigé pour déplacer le véhicule (2) à la transition d, $\Delta h$ et à la masse $m$ de véhicule
   - l'utilisation des données positionnelles et des données opérationnelles pour déterminer la distance $d$ parcourue par le véhicule (2), la hauteur de changement $\Delta h$ des positions du véhicule, le changement de la vitesse $v$ du véhicule, et le travail réel $W$ pour déplacer le véhicule, acquis à partir du cycle de mesure pendant la conduite, et
   - le calcul de la masse $m$ du véhicule (2) à partir de la dépendance du travail $W_r$ exigé pour déplacer le véhicule à la transition parcourue par le véhicule et à la masse de véhicule, à la distance d parcourue par le véhicule, au changement de hauteur $\Delta h$ des positions, au changement de vitesse $v$ et au travail réel W pour déplacer le véhicule, pendant le cycle de mesure et au principe d'économies d'énergie.

5. Procédé selon l'une quelconque des revendications 1 à 4, **caractérisé en ce que** le rapport de glissement normalisé s'est déterminé en soustrayant le rapport de glissement $s_0$ sur une surface antidérapante depuis le rapport de glissement $s_1$ pendant la conduite.

6. Procédé selon l'une quelconque des revendications 1 à 5, **caractérisé en ce que** pour assurer une détermination précise de la glissance, on détermine seulement que le couple moteur dépasse une valeur de seuil définie à l'avance.

7. Procédé selon la revendication 6, **caractérisé en ce que** la valeur de seuil est d'au moins 50 %, de préférence au moins 70 % de la valeur de couple moteur maximale.

8. Procédé selon l'une quelconque des revendications 1 à 7, **caractérisé en ce que** des données positionnelles concernant le véhicule (2) sont collectées pendant la conduite, et les données positionnelles, en même temps que les informations concernant la glissance, sont transférées au système central (6) pour stockage et traitement ultérieur.

9. Procédé selon la revendication 8, **caractérisé en ce que** les données positionnelles et les informations concernant la glissance sont transférées au système central (6) pendant la conduite en utilisant un moyen de transfert de données sans fil (5).

10. Procédé selon la revendication 8 ou 9, **caractérisé en ce que** la glissance de surface de la route (1) est déterminée dans le système central (6) en combinant les informations concernant la glissance collectées par plusieurs véhicules (2).

11. Procédé selon l'une quelconque des revendications précédentes, **caractérisé en ce que** des données positionnelles concernant le véhicule (2) sont collectées en utilisant un appareil de positionnement par satellite GPS (7).

**Step 1**

Determining, prior to the actual driving, driving tests on a non-slip surface, and using the tests to determine the slip ratio $(s_0(N(m),F)$ for the non-slip surface and the work $W_r(d,\square h,m)$ required for moving the vehicle

**Step 2**

Collecting positional data on the vehicle during driving by means of a GPS apparatus, and operational data on the vehicle from the vehicle's data bus

Determining the vehicle mass $m$ from the positional data and the operational data

Determiming the slip ratio $s_1$, the normal force $N_1$, and the traction force $F_1$ of the driving wheel from the operational data and mass

Determining the normalized slip ratio $s'$ by subtracting the slip ratio $s_0(N=N_1,F=F_1)$ on a non-slip surface from the slip ratio $s_1(N=N_1,F=F_1)$

Determining the road surface slipperiness from the normalized slip ratio $s'$

Transferring the positional data and the information on slipperiness to the central system for further processing

**Fig. 1**

**Fig. 2**

EP 2 005 140 B1

**EP 2 005 140 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050038589 A1
- US 5419624 A1
- US 6650988 B2
- FI 20050670

**Non-patent literature cited in the description**

- Slip-based Tire-Road Friction Estimation. *Automatica,* 1997, vol. 33 (6), 1087-1999